# EUROPEAN PATENT SPECIFICATION

(11) **EP 4 564 743 B1**
(45) Date of publication and mention of the grant of the patent: **24.06.2026**
(21) Application number: 24212832.0
(22) Date of filing: 13.11.2024
(51) Int. Cl.: H04L 9/40

(54) **METHOD AND SYSTEM FOR AUTOMATICALLY CHANGING A SECURITY LEVEL CONFIGURATION OF A SECURITY SYSTEM OF A FACILITY BASED ON A RECEIVED EVENT PROFILE OF AN EVENT TO BE HELD AT THE FACILITY**
VERFAHREN UND SYSTEM ZUM AUTOMATISCHEN ÄNDERN EINER SICHERHEITSEBENENKONFIGURATION EINES SICHERHEITSSYSTEMS EINER ANLAGE AUF BASIS EINES EMPFANGENEN EREIGNISPROFILS EINES AN DER ANLAGE ZU HALTENDEN EREIGNISSES
PROCÉDÉ ET SYSTÈME POUR CHANGER AUTOMATIQUEMENT UNE CONFIGURATION DE NIVEAU DE SÉCURITÉ D'UN SYSTÈME DE SÉCURITÉ D'UNE INSTALLATION SUR LA BASE D'UN PROFIL D'ÉVÉNEMENT REÇU D'UN ÉVÉNEMENT À MAINTENIR À L'INSTALLATION

(30) Priority: 30.11.2023 US 202318525106
(43) Date of publication of application: 04.06.2025
(73) Proprietor: Honeywell International Inc., Charlotte, NC 28202 (US)
(72) Inventor: SETHURAMAN, Raja, Charlotte, 28202 (US); SEKAR, Rajaboopathi, Charlotte, 28202 (US); SOMASUNDARAM, Poothabalan, Charlotte, 28202 (US); MYLADAN, Jareesh C., Charlotte, 28202 (US)
(74) Representative: Haseltine Lake Kempner LLP

(56) References cited:
- US-A1- 2006 080 541

## Description

### TECHNICAL FIELD

The present disclosure relates generally to security systems and more particularly to automatically-generated event-based changes to security settings within the security system.

### BACKGROUND

A number of facilities have security systems. In some cases, the security configuration for the facility may vary from day to day, and between different areas and regions of the facility. As an example, say a particular building has vendors coming for the day. This may involve less stringent security settings for the lobby and the conference room and more stringent security settings for the server room. Variable security settings may include changes in how an individual accesses particular areas and regions of the facility, for example. These configuration changes may be difficult to implement because the security personnel need to manually think through security aspects and determine the appropriate configuration based on the available devices and the current security situation in the facility. This can require significant operator expertise. Also, manually identifying and changing security configurations based on dynamically changing security situations in the facility can be time consuming, tedious and error prone. What would be desirable are methods and systems that automatically identify and/or implement security system configuration changes based on dynamic security situations occurring in the facility.

US2006080541A1 discloses a system and method for automatically regulating access control levels in an access control system based on prevailing security levels including homeland security levels, local environment situations such as crowds, rioting, looting, severe weather and temporal states such as workdays, weekends, holidays, and open houses.

### SUMMARY

The present disclosure relates generally to security systems and more particularly to automatically-generated event-based changes to security settings within the security system. An example may be found in a method for controlling a security level of a security system of a facility. The illustrative method includes receiving an event profile associated with an event to be held at the facility, selecting a selected one or more of a plurality of predetermined security level configurations based at least in part on the received event profile, and automatically changing the security level of at least part of the security system based on the selected one or more of a plurality of predetermined security level configurations.

Another example may be found in a security system for a facility. The illustrative security system includes a plurality of security system sensors, and a controller that is operatively coupled to the security system sensors. The controller is configured to store a plurality of predetermined security level configurations. The controller is configured to identify an event profile associated with an event to be held at the facility, select a selected one or more of the plurality of predetermined security level configurations based at least in part on the identified event profile, and automatically change the security level of at least part of the security system based on the selected one or more of a plurality of predetermined security level configurations.

Another example may be found in a non-transitory computer readable medium storing instructions that when executed by one or more processors, causes the one or more processors to identify an event profile associated with an event to be held at a facility, automatically select a selected one or more of a plurality of predetermined security level configurations based at least in part on the identified event profile, and automatically change the security level of at least part of a security system of the facility based on the selected one or more of a plurality of predetermined security level configurations.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative security system;
Figure 2 is a schematic block diagram showing an illustrative architecture that may be implemented in combination with the illustrative security system shown in Figure 1;
Figure 3 is a flow diagram showing an illustrative dataflow through the analytics engine shown in Figure 2;
Figure 4 is a flow diagram showing an illustrative method for controlling a security level of the illustrative security system of Figure 1;
Figure 5 is a flow diagram showing an illustrative method for controlling a security level of the illustrative security system of Figure 1; and
Figure 6 is a flow diagram showing an illustrative method for self-learning.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the scope of the disclosure

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

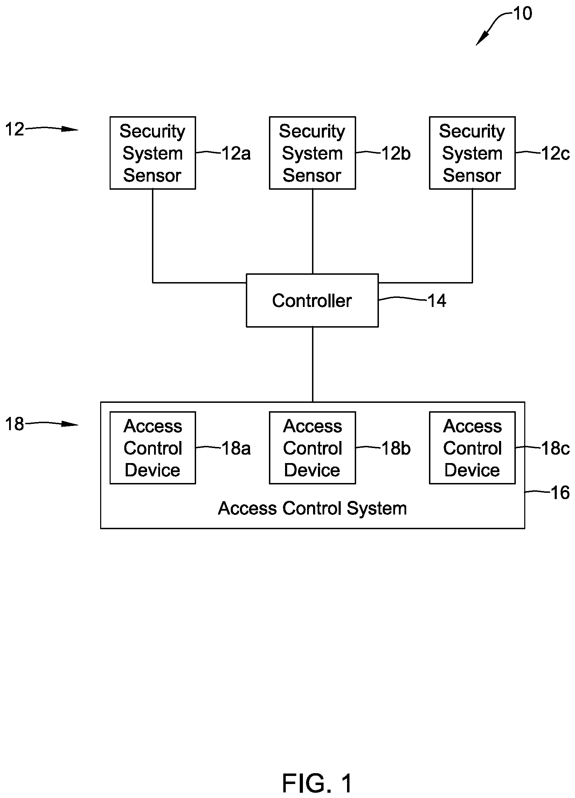

Figure 1 is a schematic block diagram showing an illustrative security system 10. The illustrative security system 10 may be installed within a facility for protecting the facility. The security system 10 includes a number of security system sensors 12, individually labeled as 12a, 12b and 12c. While a total of three security system sensors 12 are shown, it will be appreciated that the security system 10 may include any number of security system sensors 12, and in some instances may include substantially more than three security system sensors 12. Each of the security system sensors 12 may represent any of a variety of different types of sensors. For example, each of the security system sensors 12 may be an intrusion sensor such as a door sensor, a window sensor, a glass break sensor, a motion sensor such as a PIR (passive infrared) sensor, a video camera and/or any other type of security system sensor. The security system 10 includes a controller 14 that is operatively coupled to the security system sensors 12. The controller 14 may be located within the facility and may communicate with the security system sensors 12 via a wired or wireless facility network. In some instances, the controller 14 may be remotely located, and may communicate with the security system sensors 12 via a gateway, for example.

In some instances, the security system 10 may further include an access control system 16 that is configured to regulate passage into secured portions of the facility. The illustrative access control system 16 includes a number of access control devices 18, individually labeled as 18a, 18b and 18c. It will be appreciated that the access control system 16 may include any number of access control devices 18, and in some cases may include substantially more than three access control devices 18, particularly in a large facility. The access control devices 18 may be access card readers, door unlock switches and/or any other access control devices. In some instances, the access control devices 18 may include video cameras that perform facial recognition in order to determine whether a particular individual should be allowed access to a particular space, for example. In some instances, the access control system 16 may be controlled by the controller 14. In some instances, the access control system 16 may include its own controller (not shown).

In the example shown, the controller 14 is configured to store a plurality of predetermined security level configurations that may be used in controlling the security system 10. The controller 14 may be configured to identify an event profile associated with an event to be held at the facility. The event profile may include, for example, a visitor profile that identifies one or more characteristics of one or more visitors who will be attending the event. In some cases, at least part of the event profile may be extracted from a meeting calendar event having a list of meeting attendees that will be attending the event, and at least part of the visitor profile may be extracted from the list of meeting attendees. In some instances, the one or more characteristics of the one or more visitors who will be attending the event may include a threat level associated with the one or more visitors to the facility. For example, a higher threat level may be associated with a controversial visitor relative to more conventional visitor. Likewise, a higher threat level may be associated with a high level executive relative to more conventional visitor. These are just examples. In some instances, the event profile may include a confidentiality level associated with the event. For example, a high level board meeting held at the facility may have a higher associated confidentiality level than an open house event. In some instances, at least part of the visitor profile may be extracted from a card swipe of a visitor at an access card reader (such as one of the access control devices 18) of the security system 10. For example, when a high level executive swipes his card at a facility, the security level of the facility may be elevated.

In some cases, the controller 14 is configured to select a selected one or more of the plurality of predetermined security level configurations based at least in part on the identified event profile. In some instances, the controller 14 may be configured to automatically select a security level configuration without operator input. In some cases, the controller may be configured to automatically suggest to an operator a particular one of the plurality of predetermined security level configurations, and give the operator the option to select. In some cases, the controller 14 is configured to automatically change the security level of at least part of the security system based on the selected one or more of a plurality of predetermined security level configurations.

In some instances, the plurality of predetermined security level configurations may define what an individual must do to gain access to a particular space. For example, in a lower security level configuration, an individual may only need to swipe an access card to gain access to a secure region. In a higher security level configuration, an individual may need to perform a two-part verification (e.g. multi-factor authentication) including swiping their access card as well as entering a PIN number, for example. In some cases, the two-part verification may include facial recognition rather than, or in addition to, entering a PIN number. A lower security level configuration may activate fewer security system sensors 12 and/or lower one or more security thresholds associated with some security system sensors 12, while a higher security level configuration may activate additional security system sensors 12 and/or raise one or more security thresholds associated with some security system sensors 12.

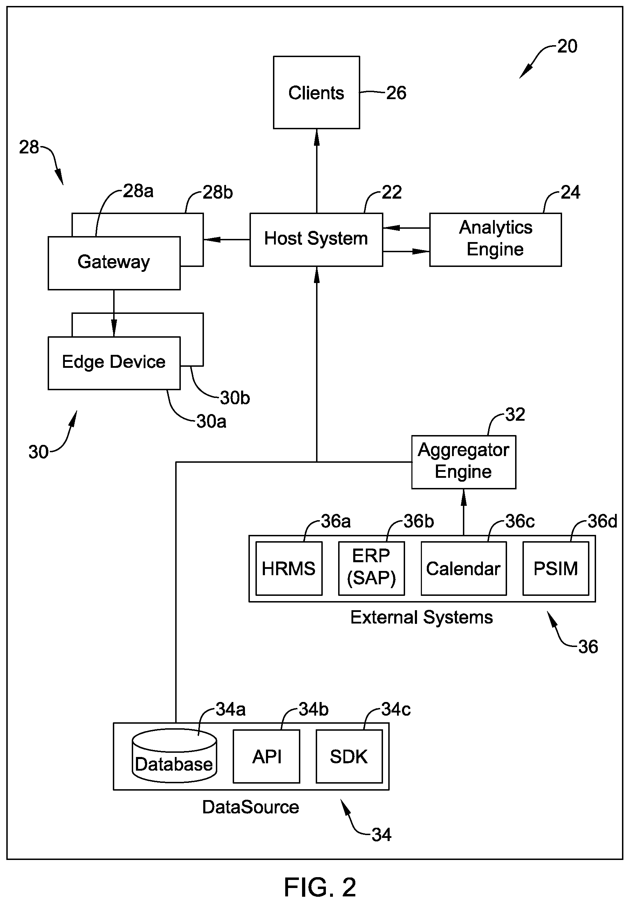

Figure 2 is a schematic block diagram showing an illustrative architecture 20 that may be implemented in combination with the security system 10. The illustrative architecture 20 includes a host system 22 that provides user profiles to an analytics engine 24 and receives security profiles from the analytics engine 24. In some instances, the analytics engine 24 may be implemented within the controller 14. In some instances, the analytics engine 24 may be cloud-based. The host system 22 provides a security dashboard to clients 26 (e.g. security operators). The host system 22 applies a security profile by communicating with each of a number of gateways 28, individually labeled as 28a and 28b. The gateways 28 in turn communicate with edge devices 30, individually labeled as 30a and 30b. In some instances, the controller 14 may be an example of one of the edge devices 30. An aggregator engine 32 may receive data from a variety of data sources 34, including a database 34a, an API (application programming interface 34b or an SDK (software development kit) 34c. The aggregator engine 32 may receive information from external systems 36, including an HRMS (human resources management system) 36a, an ERP (SAP) (enterprise planning resource software) 36b, a calendar 36c or a PSIM (physical security information management) 36d. The HRMS 36a may be used to identify users associated with a card swipe, a meeting request and/or any other event. The calendar 36c may identify scheduled events for the facility and in some cases attendees of the events. The PSIM 36d may report card swipe details, facial recognition details, motion events and/or any other events reported by the security system of the facility. The aggregator engine 32 collects this information and provides it to the host system 22. The host system 22 uses the information to determine which users are currently at or are expected to be at the facility, and to provide corresponding user profiles to the analytics engine 24.

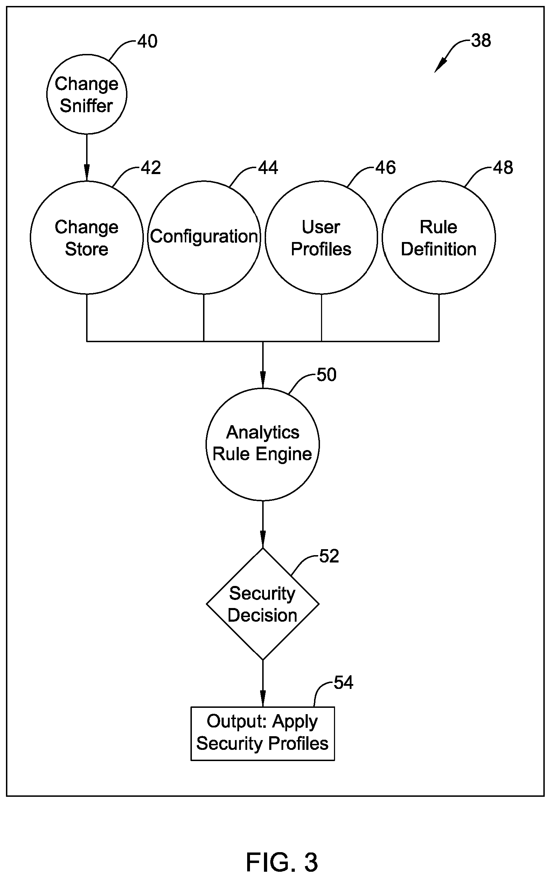

Figure 3 is a flow diagram showing an illustrative dataflow 38 of the analytics engine 24 (Figure 2). A change sniffer 40 detects changes such as changes to the normal day to day operation of the facility and reports to a change store 42. The changes may include, for example, a card swipe event, a motion event, a facial recognition event, a scheduled event and/or any other change occurring in the operation of the facility. A configuration block 44, a user profiles block 46 and a rule definition block 48 each provide information to an analytics rule engine 50. The analytics rule engine 50 outputs a security decision 52 and provides an output 54 in which a security profile is implemented by changing one or more security level configurations of a security system (such as security system 10).

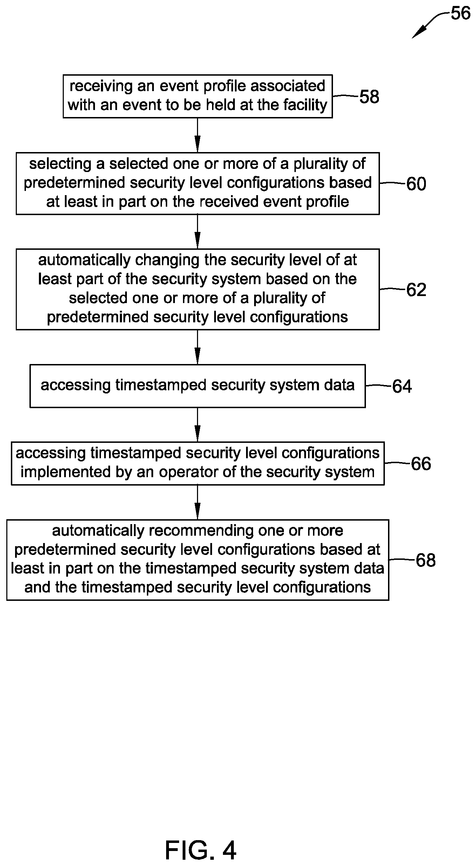

Figure 4 is a flow diagram showing an illustrative method 56 for controlling a security level of a security system (such as the security system 10) of a facility. The illustrative method 56 includes receiving an event profile associated with an event to be held at the facility, as indicated at block 58. In some instances, the event profile may include a visitor profile, wherein the visitor profile identifies one or more characteristics of one or more visitors who will be attending the event. In some cases, at least part of the event profile may be extracted from a meeting calendar event (e.g. from calendar 36c) having a list of meeting attendees, and wherein at least part of the visitor profile may be extracted from the list of meeting attendees. In some instances, at least part of the visitor profile may be extracted from a card swipe of a visitor at an access card reader of the security system. The one or more characteristics of the one or more visitors who will be attending the event may include a threat level associated with the one or more visitors. Alternatively, or in addition, the event profile may include a confidentiality level associated with the event.

A selected one or more of a plurality of predetermined security level configurations is selected based at least in part on the received event profile, as indicated at block 60. The security level of at least part of the security system is automatically changed based on the selected one or more of a plurality of predetermined security level configurations, as indicated at block 62. In some instances, the selected one or more of the plurality of predetermined security level configurations may be automatically selected based at least in part on the received event profile without operator input. In some cases, the selected one or more of the plurality of predetermined security level configurations may be manually selected by an operator from one or more security level configurations automatically suggested by the system.

In some instances, automatically changing the security level of at least part of the security system based at least in part on the received event profile may include activating one or more security functions of the security system that were previously deactivated and/or changing one or more sensitivity thresholds of one or more security functions of the security system. As an example, the one or more security functions may include activating one or more video analytics algorithms that were previously deactivated. As another example, the one or more security functions may include activating one or more security system sensors and/or changing one or more sensitivity thresholds of one or more of the security system sensors. These are just examples.

In some instances, the method 56 may further include accessing timestamped security system data, as indicated at block 64, and accessing timestamped security level configuration changes implemented by an operator of the security system, as indicated at block 66. The method 56 may include automatically recommending one or more predetermined security level configurations based at least in part on the timestamped security system data and the timestamped security level configurations, as indicated at block 68.

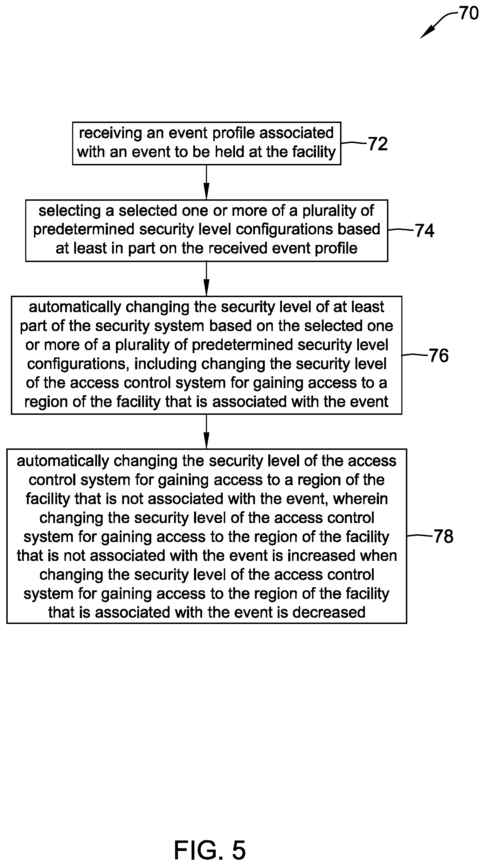

Figure 5 is a flow diagram showing an illustrative method 70 for controlling a security level of a security system (such as the security system 10) of a facility. The illustrative method 70 includes receiving an event profile associated with an event to be held at the facility, as indicated at block 72. In some instances, the event profile may include a visitor profile, wherein the visitor profile identifies one or more characteristics of one or more visitors who will be attending the event. In some cases, at least part of the event profile may be extracted from a meeting calendar event having a list of meeting attendees, and wherein at least part of the visitor profile may be extracted from the list of meeting attendees. In some instances, at least part of the visitor profile may be extracted from a card swipe of a visitor at an access card reader of the security system. The one or more characteristics of the one or more visitors who will be attending the event may include a threat level associated with the one or more visitors. The event profile may include a confidentiality level associated with the event.

A selected one or more of a plurality of predetermined security level configurations is selected based at least in part on the received event profile, as indicated at block 74. The method 70 includes automatically changing the security level of at least part of the security system based on the selected one or more of a plurality of predetermined security level configurations, including changing the security level of the access control system for gaining access to a region of the facility that is associated with the event, as indicated at block 76. As an example, changing the security level of the access control system for gaining access to the region of the facility that is associated with the event may include changing a security protocol from single-factor authentication to multi-factor authentication for gaining access to the region of the facility that is associated with the event. In some instances, the method 70 also includes automatically changing the security level of the access control system for gaining access to a region of the facility that is not associated with the event. In some cases, the security level of the access control system for gaining access to the region of the facility that is not associated with the event is increased when the security level of the access control system for gaining access to the region of the facility that is associated with the event is decreased, as indicated at block 78. For example, when an open house is held in a lobby of the facility, the security level of the access control system for gaining access to the lobby may be decreased (open door policy) during the event, while the security level of the access control system for gaining access to other areas of the facility, such as a server room or a laboratory, may be increased during the event (e.g. multi-factor authentication).

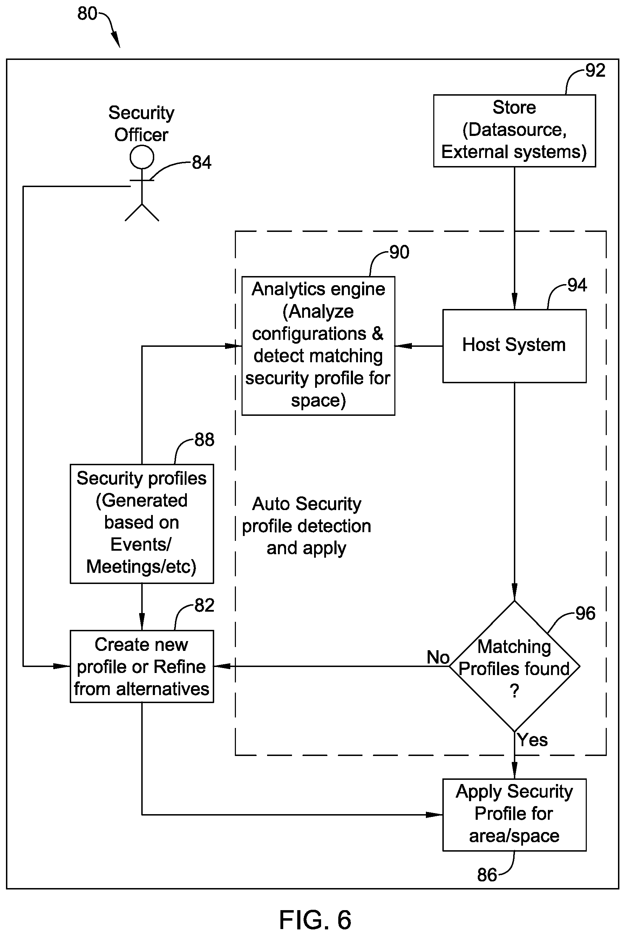

Figure 6 is a flow diagram showing an illustrative method 80 for self-learning security profiles for the facility based on security system and other available data. A library of security profiles, which are generated over time based on security system and other available data, is stored at block 88. The library of security profiles are made available to an analytics engine 90 (may be a representation of the analytics engine 24 shown in Figure 2). Information such as schedules and planned events are provided from a block 92 to a host system 94 (may be a representation of the host system 22 shown in Figure 2). The host system 94 may access the analytics engine 90 and generate a security profile. The generated security profile may be provided to block 96. Block 96 searches for a matching security profile in the library of security profiles. If a matching security profile is found, control passes to block 86 where the matching security profile is applied. If no match is found, control passes to block 82, and a suggested new security profile is created, sometimes based on a refinement from one or more of the security profiles of the library of security profiles. The suggested new security profile is presented to a security operator 84, and if approved by the security operator 84, the suggested new security profile is added to the security profile library at 88. Each security profile defines a plurality of predetermined security level configurations for the security system. Over time, the library of security profiles accumulates more and more approved security profiles that can quickly and easily adapt the security system to ever more event variations in the facility.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for controlling a security level of a security system of a facility, the method comprising: receiving an event profile associated with an event to be held at the facility;
selecting one or more of a plurality of predetermined security level configurations based at least in part on the received event profile;
automatically changing the security level of at least part of the security system based on the selected one or more of a plurality of predetermined security level configurations;
accessing timestamped security system data;
accessing timestamped security level configurations implemented by an operator of the security system; and
automatically recommending one or more predetermined security level configurations based at least in part on the timestamped security system data and the timestamped security level configurations.

2. The method of claim 1, wherein the event profile includes a visitor profile,
wherein the visitor profile identifies one or more characteristics of one or more visitors who will be attending the event.

3. The method of claim 2, wherein at least part of the event profile is extracted from a meeting calendar event having a list of meeting attendees, and wherein at least part of the visitor profile is extracted from the list of meeting attendees.

4. The method of claim 2, wherein at least part of the visitor profile is extracted from a card swipe of a visitor at an access card reader of the security system.

5. The method of claim 2, wherein the one or more characteristics of the one or more visitors who will be attending the event include a threat level presented to the one or more visitors.

6. The method of claim 2, wherein the one or more characteristics of the one or more visitors who will be attending the event include a threat level associated with the one or more visitors to the facility.

7. The method of claim **1,** wherein the event profile includes a confidentiality level associated with the event.

8. The method of claim **1,** wherein the selected one or more of the plurality of predetermined security level configurations is automatically selected based at least in part on the received event profile without operator input.

9. The method of claim **1,** wherein the security system includes an access control system, and wherein automatically changing the security level of at least part of the security system includes changing the security level of the access control system for gaining access to a region of the facility that is associated with the event.

10. The method of claim 9, wherein changing the security level of the access control system for gaining access to the region of the facility that is associated with the event includes changing a security protocol from single-factor authentication to multi-factor authentication for gaining access to the region of the facility that is associated with the event.

11. The method of claim 9, further comprising automatically changing the security level of the access control system for gaining access to a region of the facility that is not associated with the event, wherein changing the security level of the access control system for gaining access to the region of the facility that is not associated with the event is increased when changing the security level of the access control system for gaining access to the region of the facility that is associated with the event is decreased.

12. The method of claim **1,** wherein automatically changing the security level of at least part of the security system based at least in part on the received event profile includes activating one or more security functions of the security system that were previously deactivated.

13. The method of claim 12, wherein the one or more security functions include activating one or more security system sensors and/or changing one or more sensitivity thresholds of one or more of the security system sensors.

14. A security system for a facility, comprising:
a plurality of security system sensors;
a controller operatively coupled to the security system sensors, the controller configured to:
store a plurality of predetermined security level configurations;
identify an event profile associated with an event to be held at the facility;
select one or more of the plurality of predetermined security level configurations based at least in part on the identified event profile;
automatically change the security level of at least part of the security system based on the selected one or more of a plurality of predetermined security level configurations;
wherein the selected one or more of the plurality of predetermined security level configurations is automatically selected based at least in part on the received event profile without operator input;
access timestamped security system data;
access timestamped security level configurations implemented by an operator of the security system; and
automatically recommend one or more predetermined security level configurations based at least in part on the timestamped security system data and the timestamped security level configurations.

## Patentansprüche

1. Verfahren zum Steuern einer Sicherheitsstufe eines Sicherheitssystems einer Einrichtung, das Verfahren umfassend: Empfangen eines Veranstaltungsprofils, das mit einer Veranstaltung verknüpft ist, die in der Einrichtung stattfinden soll;
Auswählen einer oder mehrerer aus einer Mehrzahl zuvor festgelegter Sicherheitsstufenkonfigurationen mindestens teilweise auf der Grundlage des empfangenen Veranstaltungsprofils;
automatisches Ändern der Sicherheitsstufe mindestens eines Teils des Sicherheitssystems auf der Grundlage der ausgewählten einen oder mehreren aus einer Mehrzahl zuvor festgelegter Sicherheitsstufenkonfigurationen;
Zugreifen auf zeitgestempelte Sicherheitssystemdaten;
Zugreifen auf zeitgestempelte Sicherheitsstufenkonfigurationen, die durch einen Bediener des Sicherheitssystems implementiert wurden; und
automatisches Empfehlen einer oder mehrerer zuvor festgelegter Sicherheitsstufenkonfigurationen mindestens teilweise auf der Grundlage der zeitgestempelten Sicherheitssystemdaten und der zeitgestempelten Sicherheitsstufenkonfigurationen.

2. Verfahren nach Anspruch 1, wobei das Veranstaltungsprofil ein Besucherprofil enthält, wobei das Besucherprofil ein oder mehrere Charakteristika eines oder mehrerer Besucher identifiziert, die an der Veranstaltung teilnehmen werden.

3. Verfahren nach Anspruch 2, wobei mindestens ein Teil des Veranstaltungsprofils aus einer Meeting-Kalender-Veranstaltung extrahiert wird, die eine Liste der Meeting-Teilnehmer aufweist, und wobei mindestens ein Teil des Besucherprofils aus der Liste der Meeting-Teilnehmer extrahiert wird.

4. Verfahren nach Anspruch 2, wobei mindestens ein Teil des Besucherprofils aus einem Kartendurchzug eines Besuchers an einem Zugangskartenleser des Sicherheitssystems extrahiert wird.

5. Verfahren nach Anspruch 2, wobei das eine oder die mehreren Charakteristika des einen oder der mehreren Besucher, die an der Veranstaltung teilnehmen werden, eine Bedrohungsstufe enthalten, die dem einen oder den mehreren Besuchern angezeigt wird.

6. Verfahren nach Anspruch 2, wobei das eine oder die mehreren Charakteristika des einen oder der mehreren Besucher, die an der Veranstaltung teilnehmen werden, eine Bedrohungsstufe enthalten, die mit dem einen oder den mehreren Besuchern der Einrichtung verknüpft ist.

7. Verfahren nach Anspruch 1, wobei das Veranstaltungsprofil eine Vertraulichkeitsstufe enthält, die mit der Veranstaltung verknüpft ist.

8. Verfahren nach Anspruch 1, wobei die eine oder die mehreren ausgewählten der Mehrzahl zuvor festgelegter Sicherheitsstufenkonfigurationen mindestens teilweise auf der Grundlage des empfangenen Veranstaltungsprofils ohne Bedienereingabe automatisch ausgewählt werden.

9. Verfahren nach Anspruch 1, wobei das Sicherheitssystem ein Zugangskontrollsystem enthält, und wobei das automatische Ändern der Sicherheitsstufe mindestens eines Teils des Sicherheitssystems das Ändern der Sicherheitsstufe des Zugangskontrollsystems enthält, um Zugang zu einer Region der Einrichtung zu erhalten, die mit der Veranstaltung verknüpft ist.

10. Verfahren nach Anspruch 9, wobei das Ändern der Sicherheitsstufe des Zugangskontrollsystems, um Zugang zu der Region der Einrichtung zu erhalten, die mit der Veranstaltung verknüpft ist, das Ändern eines Sicherheitsprotokolls von einer Ein-Faktor-Authentifizierung zu einer Mehr-Faktor-Authentifizierung enthält, um Zugang zu der Region der Einrichtung zu erhalten, die mit der Veranstaltung verknüpft ist.

11. Verfahren nach Anspruch 9, des Weiteren umfassend das automatische Ändern der Sicherheitsstufe des Zugangskontrollsystems, um Zugang zu einer Region der Einrichtung zu erlangen, die nicht mit der Veranstaltung verknüpft ist, wobei das Ändern der Sicherheitsstufe des Zugangskontrollsystems, um Zugang zu der Region der Einrichtung zu erlangen, die nicht mit der Veranstaltung verknüpft ist, erhöht wird, wenn das Ändern der Sicherheitsstufe des Zugangskontrollsystems, um Zugang zu der Region der Einrichtung zu erlangen, der mit der Veranstaltung verknüpft ist, verringert wird.

12. Verfahren nach Anspruch 1, wobei das automatische Ändern der Sicherheitsstufe mindestens eines Teils des Sicherheitssystems mindestens teilweise auf der Grundlage des empfangenen Veranstaltungsprofil das Aktivieren einer oder mehrerer Sicherheitsfunktionen des Sicherheitssystems, die zuvor deaktiviert waren, enthält.

13. Verfahren nach Anspruch 12, wobei die eine oder die mehreren Sicherheitsfunktionen das Aktivieren eines oder mehrerer Sicherheitssystemsensoren und/oder das Ändern einer oder mehrerer Empfindlichkeitsschwellen eines oder mehrerer der Sicherheitssystemsensoren enthalten.

14. Sicherheitssystem für eine Einrichtung, umfassend:
mehrere Sicherheitssystemsensoren;
einen Controller, der mit den Sicherheitssystemsensoren wirkgekoppelt ist, wobei der Controller eingerichtet ist zum:
Speichern mehrerer zuvor festgelegter Sicherheitsstufenkonfigurationen;
Identifizieren eines Veranstaltungsprofils, das mit einer Veranstaltung verknüpft ist, die in der Einrichtung stattfinden soll;
Auswählen einer oder mehrerer der Mehrzahl zuvor festgelegter Sicherheitsstufenkonfigurationen mindestens teilweise auf der Grundlage des identifizierten Veranstaltungsprofils;
automatischen Ändern der Sicherheitsstufe mindestens eines Teils des Sicherheitssystems auf der Grundlage der ausgewählten einen oder mehreren aus einer Mehrzahl zuvor festgelegten Sicherheitsstufenkonfigurationen;
wobei die eine oder die mehreren ausgewählten der Mehrzahl zuvor festgelegter Sicherheitsstufenkonfigurationen mindestens teilweise auf der Grundlage des empfangenen Veranstaltungsprofils ohne Bedienereingabe automatisch ausgewählt werden;
Zugreifen auf zeitgestempelte Sicherheitssystemdaten;
Zugreifen auf zeitgestempelte Sicherheitsstufenkonfigurationen, die durch einen Bediener des Sicherheitssystems implementiert wurden; und
automatischen Empfehlen einer oder mehrerer zuvor festgelegter Sicherheitsstufenkonfigurationen mindestens teilweise auf der Grundlage der zeitgestempelten Sicherheitssystemdaten und der zeitgestempelten Sicherheitsstufenkonfigurationen.

## Revendications

1. Procédé de commande d'un niveau de sécurité d'un système de sécurité d'une installation, le procédé comprenant : la réception d'un profil d'événement associé à un événement devant se tenir dans l'installation ;
la sélection d'une ou plusieurs parmi une pluralité de configurations de niveau de sécurité prédéterminées sur la base, au moins en partie, du profil d'événement reçu ;
la modification automatique du niveau de sécurité d'au moins une partie du système de sécurité sur la base de ladite une ou plusieurs parmi une pluralité de configurations de niveau de sécurité prédéterminées sélectionnées ;
l'accès à des données du système de sécurité horodatées ;
l'accès à des configurations de niveau de sécurité horodatées mises en œuvre par un opérateur du système de sécurité ; et
la recommandation automatique d'une ou plusieurs configurations de niveau de sécurité prédéterminées sur la base, au moins en partie, des données du système de sécurité horodatées et des configurations de niveau de sécurité horodatées.

2. Procédé selon la revendication 1, dans lequel le profil d'événement inclut un profil de visiteur, dans lequel le profil de visiteur identifie une ou plusieurs caractéristiques d'un ou plusieurs visiteurs qui assisteront à l'événement.

3. Procédé selon la revendication 2, dans lequel au moins une partie du profil d'événement est extraite d'un événement de calendrier de réunion comportant une liste de participants à la réunion, et dans lequel au moins une partie du profil de visiteur est extraite de la liste de participants à la réunion.

4. Procédé selon la revendication 2, dans lequel au moins une partie du profil de visiteur est extraite d'un passage de carte d'un visiteur au niveau d'un lecteur de carte d'accès du système de sécurité.

5. Procédé selon la revendication 2, dans lequel lesdites une ou plusieurs caractéristiques desdits un ou plusieurs visiteurs qui assisteront à l'événement incluent un niveau de menace présenté auxdits un ou plusieurs visiteurs.

6. Procédé selon la revendication 2, dans lequel lesdites une ou plusieurs caractéristiques desdits un ou plusieurs visiteurs qui assisteront à l'événement incluent un niveau de menace associé auxdits un ou plusieurs visiteurs de l'installation.

7. Procédé selon la revendication 1, dans lequel le profil d'événement inclut un niveau de confidentialité associé à l'événement.

8. Procédé selon la revendication 1, dans lequel lesdites une ou plusieurs parmi la pluralité de configurations de niveau de sécurité prédéterminées sélectionnées est automatiquement sélectionnée sur la base, au moins en partie, du profil d'événement reçu sans saisie d'opérateur.

9. Procédé selon la revendication 1, dans lequel le système de sécurité inclut un système de contrôle d'accès, et dans lequel la modification automatique du niveau de sécurité d'au moins une partie du système de sécurité inclut la modification du niveau de sécurité du système de contrôle d'accès pour l'obtention d'un accès à une zone de l'installation qui est associée à l'événement.

10. Procédé selon la revendication 9, dans lequel la modification du niveau de sécurité du système de contrôle d'accès pour l'obtention d'un accès à la zone de l'installation qui est associée à l'événement inclut la modification d'un protocole de sécurité issu d'une authentification à facteur unique vers une authentification multifactorielle pour l'obtention d'un accès à la zone de l'installation qui est associée à l'événement.

11. Procédé selon la revendication 9, comprenant en outre la modification automatique du niveau de sécurité du système de contrôle d'accès pour l'obtention d'un accès à une zone de l'installation qui n'est pas associée à l'événement, dans lequel la modification du niveau de sécurité du système de contrôle d'accès pour l'obtention d'un accès à la zone de l'installation qui n'est pas associée à l'événement est augmentée lorsque la modification du niveau de sécurité du système de contrôle d'accès pour l'obtention d'un accès à la zone de l'installation qui est associée à l'événement est diminuée.

12. Procédé selon la revendication 1, dans lequel la modification automatique du niveau de sécurité d'au moins une partie du système de sécurité sur la base, au moins en partie, du profil d'événement reçu inclut l'activation d'une ou plusieurs fonctions de sécurité du système de sécurité qui étaient précédemment désactivées.

13. Procédé selon la revendication 12, dans lequel lesdites une ou plusieurs fonctions de sécurité incluent l'activation d'un ou plusieurs capteurs du système de sécurité et/ou la modification d'un ou plusieurs seuils de sensibilité d'un ou plusieurs des capteurs du système de sécurité.

14. Système de sécurité pour une installation, comprenant :
une pluralité de capteurs du système de sécurité ;
un dispositif de commande couplé de manière opérationnelle aux capteurs du système de sécurité, le dispositif de commande étant configuré pour :
stocker une pluralité de configurations de niveau de sécurité prédéterminées ;
identifier un profil d'événement associé à un événement devant se tenir dans l'installation ;
sélectionner une ou plusieurs parmi la pluralité de configurations de niveau de sécurité prédéterminées sur la base, au moins en partie, du profil d'événement identifié ;
modifier automatiquement le niveau de sécurité d'au moins une partie du système de sécurité sur la base de ladite une ou plusieurs parmi une pluralité de configurations de niveau de sécurité prédéterminées sélectionnées ;
dans lequel ladite une ou plusieurs parmi la pluralité de configurations de niveau de sécurité prédéterminées sélectionnées est automatiquement sélectionnée sur la base, au moins en partie, du profil d'événement reçu sans saisie d'opérateur ;
accéder à des données du système de sécurité horodatées ;
accéder à des configurations de niveau de sécurité horodatées mises en œuvre par un opérateur du système de sécurité ; et
recommander automatiquement une ou plusieurs configurations de niveau de sécurité prédéterminées sur la base, au moins en partie, des données du système de sécurité horodatées et des configurations de niveau de sécurité horodatées.
